# EUROPÄISCHE PATENTSCHRIFT

(11) **EP 1 971 678 B1**
(45) Veröffentlichungstag und Bekanntmachung des Hinweises auf die Patenterteilung: **21.04.2010**
(21) Anmeldenummer: 06818091.8
(22) Anmeldetag: 22.11.2006
(51) Int. Cl.: C12C 11/11, B01F 3/04, B01D 19/00

(54) **VERFAHREN ZUR HERSTELLUNG VON BIER**
BEER-MANUFACTURING PROCESS
PROCEDE DE FABRICATION DE BIERE

(30) Priorität: 22.12.2005 DE 102005062157
(43) Veröffentlichungstag der Anmeldung: 24.09.2008
(73) Patentinhaber: Carbotek Holding GmbH, 86720 Nördlingen (DE)
(72) Erfinder: KOCH, Florian, 86720 Nördlingen (DE); FISCHER, Georg, 86738 Deiningen (DE)
(74) Vertreter: Hofmann, Harald
(86) Internationale Anmeldenummer: PCT/DE2006/002063
(87) Internationale Veröffentlichungsnummer: WO 2007/071224

(56) Entgegenhaltungen:
- DE-A1- 10 003 155
- DE-A1- 10 160 397
- US-A1- 3 295 988
- US-A1- 4 041 180

## Beschreibung

Die vorliegende Erfindung betrifft ein Verfahren zur Herstellung von Bier.

Bei Bier handelt es sich um ein alkohol- und kohlensäurehaltiges Getränk. Es wird auf der Basis von verzuckerter Stärke durch Gärung hergestellt. Die Stärke als Ausgangsstoff für Bier wird dabei in der Regel von Getreide (Gerste, Roggen, Weizen, Reis, Mais) gewonnen, seltener aus Kartoffeln oder bspw. Erbsen. Nach dem deutschen Reinheitsgebot, nach dem die Brauereien in Deutschland überwiegend brauen, dürfen nur Wasser, Malz, Hopfen und Hefe zur Herstellung von Bier verwendet werden. In allen Fällen entstehen bei dem Gärprozess Alkohol und - im Volksmund - Kohlensäure. Genauer gesagt entsteht Kohlenstoffdioxid oder auch Kohlendioxid (CO₂), aus welchem Kohlensäure (H₂CO₃) gebildet wird. Über 99 % des Kohlendioxides bindet sich nur physikalisch in Wasser (oder auch Bier). Der Rest (weniger als 1%) bildet chemisch gesehen Kohlensäure (H₂CO₃).

Im weiteren Verlauf dieses Dokumentes werden die Begriffe "Kohlensäure" oder "kohlensäurehaltig" als Synonym für die physikalisch/chemische Bindung von Kohlendioxid (CO₂) in Wasser (oder auch Bier) im angegebenen Mischungsverhältnis (99 zu 1) verwendet. Bier gelangt stets kohlensäurehaltig in den Handel. Ohne die im Bier enthaltene Kohlensäure wäre Bier nicht für den Konsum geeignet und würde von der Lebensmittelüberwachung als mangelhaft eingestuft werden.

Beim Brauvorgang werden in der Regel Hauptgärung und Nachgärung unterschieden. Beim Hauptgärgang entweicht das entstehende Kohlendioxid (CO₂), sobald der CO₂-Sättigungsdruck in der Flüssigkeit erreicht ist. Das in der Nachgärphase entstehende Kohlendioxid wird dagegen im Bier gebunden, indem die Gärtanks mit einem Gegendruck beaufschlagt werden. Dies erfolgt in der Regel über einen Spundapparat. Das ist ein einstellbarer Druckregler für den Gärungsdruck, z. B. 0,5 bar. Solange der Tankinnendruck geringer ist als der eingestellte Gegendruck, wird die entstehende Gärungskohlensäure in der Flüssigkeit gebunden. Darüber hinaus entstehendes CO₂ kann durch den Spundapparat entweichen. Die Menge der gebundenen Kohlensäure ist dabei immer temperatur- und druckabhängig.

Bedingt durch die im Bier gebundene Kohlensäure steht das in einem Behälter, z. B. Fass oder Flasche, enthaltene Bier unter Druck. Durchschnittlich sind bei untergärigem Bier wischen 4 und 6 g CO₂ pro kg Bier und bei obergärigem Bier zwischen 4 und 10 g CO₂ pro kg Bier gelöst. Ausgehend von einer durchschnittlichen Konzentration von 6 g/kg beträgt der Behälterinnendruck bei 10° C 1,6 bar und bei 30° C 3,6 bar. Die Bierfässer, so genannte KEG-Fässer, werden beim Ausschenken mit CO₂ oder einem anderen Gas mit bis zu 3 bar Druck anstelle des Bieres befällt. Aufgrund des Volumens von KEG-Fässern (typischerweise 20, 30 und 50 Liter) und des maximalen Drucks (3 bar bei Bier) unterliegen diese der Druckbehälterverordnung und müssen den sicherheitstechnischen Anforderungen entsprechen. Je größer das Behältervolumen ist, desto aufwändiger ist die Herstellung derselben, da das Gefahrenpotential mit dem Volumen steigt. Flaschen (welche nicht der Druckbehälterverordnung unterliegen) werden dabei sowohl als Einweg- als auch als Mehrwegflaschen eingesetzt. Fässer hingegen werden nur als Mehrwegbehälter eingesetzt, da die Produktion sehr aufwändig und teuer ist. Ein Mehrwegbehälter impliziert die Wiederverwendung und den damit verbundenen Rücktransport zum erneuten Befüllen. Die aufwändige Fertigung beim Fass, der Hin- und Rücktransport, sowie ein relativ hohes Leergewicht, ergeben einen recht hohen Kostenblock, welcher natürlich auf den Produktpreis aufgeschlagen wird.

Auch die Befüllung eines Druckbehälters ist verhältnismäßig aufwändig, da die Anlage druckbedingte Sicherheitsaspekte in der Konstruktion erfüllen muss. Das Befüllen von Mehrwegbehältern ist ebenfalls teuer, da die Behälter vor dem erneuten Befüllen intensiv gereinigt werden müssen. Schließlich sind auch die Anforderungen an eine Schankanlage vergleichsweise hoch, da auch hier sowohl der Fassinnendruck als auch der Förderdruck, mit dem das Bier gefördert wird, große Anforderungen an die Schankanlage stellen. Allerdings ist der Gehalt von Kohlensäure im Bier unbedingt erforderlich. Erst die im Bier gelöste Kohlensäure macht das Getränk zu dem Getränk, als welches es verstanden wird. Bier ohne oder mit wenig Kohlensäure ist schlichtweg undenkbar und wäre auch nicht genießbar. Wenig Kohlensäure ist per Definition dann gegeben, wenn der untere Grenzwert von 4g CO₂ pro kg Bier unterschritten wird.

In Anbetracht der oben geschilderten Problematik liegt der Erfindung die Aufgabe zugrunde, ein Verfahren zur Herstellung von Bier bereitzustellen, durch welches die Abfüllung und der Transport erleichtert werden und die Gesamtkosten, betrachtet von dem Brauvorgang bis zum Ausschenken in der Schankanlage, reduziert werden.

Diese Aufgabe wird gelöst durch ein Verfahren zur Herstellung von Bier nach Anspruch 1. Vorteilhafte Ausgestaltungen sind Gegenstand der Unteransprüche.

Bei dem erfindungsgemäßen Verfahren wird zunächst ein CO₂-freies, bzw. CO₂-armes Bierzwischenprodukt produziert. CO₂-arm, auch als schwach CO₂-haltig bezeichnet, bedeutet, dass der CO₂-Anteil pro kg Bier maximal 1 g beträgt.

Dies erfolgt bspw. dadurch, dass beim Nachgärvorgang kein Gegendruck angelegt wird (es herrscht also reiner Atmosphärendruck). Hierbei binden sich jedoch bis zu 3,4 g CO₂ pro kg Bier. Es muss also zusätzlich Kohlensäure nachträglich aus dem Bier entfernt werden, z. B. durch die Verwendung einer Entkarbonisierungsanlage (Entgasungsanlage) oder durch jedes andere bekannte und geeignete Verfahren, mit dem CO₂ aus einer Flüssigkeit entfernt werden kann und das lebensmittelgeeignet ist Weitere Beispiele an Entkarbonisierungsverfahren sind Membranfiltration, Erhitzen, mechanische Bewegung Austreiben, insbesondere mit N₂ oder Luft, und Erzeugung eines Vakuums, insbesondere mittels einer Vakuumpumpe oder einer Venturi-Düse.

Bei dem Zwischenprodukt handelt es sich somit nicht um eine Flüssigkeit, die als Bier bezeichnet werden kann, sondern es handelt sich um ein echtes Zwischenprodukt, das auch als Biervorprodukt bezeichnet werden kann. Der CO₂-Gehalt dieses Bierzwischenproduktes liegt mit maximal 1 g pro kg Bier weit unter dem untersten Grenzwert für Bier von 4 g CO₂ pro kg Bier und wäre damit für sich nicht verkehrsfähig und ungenießbar. Bevorzugt ist das Bieizwischenprodukt eine Flüssigkeit, die eine Zusammensetzung und Stärke aufweist wie handelsübliches Bier, das zum Verzehr in den Markt gelangt, die jedoch CO₂-frei bzw. CO₂-arm ist. Das Bierzwischenprodukt gemäß der Erfindung kann sowohl alkoholhaltig als auch alkoholreduziert und alkoholfrei sein.

Gemäß dem erfindungsgemäßen Verfahren wird dieses Bierzwischenprodukt nun in zumindest einen kaum druckfähigen Behälter abgefüllt. Als kaum druckfähig wird ein Behälter dann bezeichnet, wenn er bis zu 0,5 bar Überdruck standhält. Auch ein ganz geringer CO₂-Anteil erzeugt bei steigenden Temperaturen einen Überdruck. Deshalb muss der Abfüllbehälter gewissen Minimaldrücken standhalten. Entscheidend ist, dass er nicht unter die Drackbehälterverordnung fällt. Dies ist deshalb wichtig, weil somit sicherheitstechnische Auflagen wegfallen, deren Umsetzung hohe Kosten erzeugen würden.

Das Bierzwischenprodukt braucht nicht mehr in Druckbehälter, die der Druckbehälterverordnung unterliegen, abgefüllt zu werden, sondern kann in jeden beliebigen und für Lebensmittel geeigneten Behälter eingefüllt werden, so wie bspw. drucklose Fässer, Container etc.. Auch die in den letzten Jahren für diverse Getränke häufiger eingesetzten Bag-In Box-Behälter oder auch Tetra-Pak^{®}-Behälter sind geeignet. Das so produzierte Bierzwischenprodukt kann folglich problemlos und ohne die Einhaltung von besonderen Gefahrgutvorschriften transportiert werden. Auch ein Versenden per Post oder Paketdienst wird nun möglich.

Gemäß dem erfindungsgemäßen Verfahren wird die Kohlensäure dem Bierzwischenprodukt später gesondert zugesetzt, und zwar mit Hilfe eines Imprägnierers, insbesondere eines Karbonators, im welchem die Imprägnierung mit Gas, insbesondere die Karbonisierung, mit Hilfe einer vergrößerten Oberfläche, bereitgestellt durch viele Schikanen une Umlenkgen, erfolgt, wodurch das genussfertige Endprodukt Bier hergestellt wird. Das spätere Zusetzen der Kohlensäure kann bspw. erst in der Schankanlage während des Ausschenkens geschehen. Wichtig ist, dass die Kohlensäure in dem Bierzwischenprodukt gelöst wird. Anders ist dies bei bekannten KEG-Fässern, die bisweilen ein CO₂-Druckpolster vorsehen, mit dessen Hilfe das Bier aus dem Fass gefördert wird. Dort wird kein zusätzliches CO₂ im Bier gelöst. Das Bier ist bereits ausreichend durch die während der Gärung entstehende Kohlensäure karbonisiert. Das CO₂ stellt lediglich den Förderdruck bereit.

Deshalb können als Alternative zu CO₂ in solchen Fässern auch andere Gase, z. B. ein als Biogon bekanntes CO₂/Stickstoff-Gemisch, eingesetzt werden, um den Förderdruck bereitzustellen. Anders bei dem erfindumgsgemäßen Verfahren; hier geht es darum, dass Kohlensäure in einem CO₂-freien oder CO₂-armen Zwischenprodukt gelöst wird, so dass dann erst Bier entsteht.

Das erfindungsgemäße Verfahren umfasst folglich die drei folgenden Grundschritte:
a) Herstellen eines Bier zwischenprodukts mit einem CO₂-Anteil von maximal 1 g pro kg, insbesondere CO₂-freien Bierzwischenprodukles,
b) Abfüllen des Hierzwischenproduktes in zumindest einen bis zu 0,5 bar Überdruck standhaltenden oder Behälter, und
c) eia in der Regel außerhalb der Brauerei stattfindendes, nachträgliches Zusetzen von CO₂ zu dem Bierzwischenprodukt, und zwar mit Hilfe eines Imprägnierers, insbesondere eines Karbonators, in welchem die Imprägnierung mit Gas, insbesondere die Karbonisierung mit Hilfe einer vergröβerten Oberfläche, bereitgestellt durch viele Schikanen.

Die Vorteile des erfindmgsgemäßen Verfahrens sind vielfältig. Die Abfüllkosten sind geringer. Die bis jetzt einzusetzenden Druckfässer (sog. KEG-Fässer) sind teuer in der Anschaffung und ihre Reinigung und die Abfüllung ist technisch aufwändig und damit ebenfalls teuer. Die Logistikkosten werden reduziert, da bei Einsatz von Einwegverpackungen der Rücktransport entfällt. Insbesondere für kleinere Spezialitätenbrauereien eröffnen sich neue Absatzmärkte, da das Bierzwischenprodukt auch per Paketdienst verschickt werden könnte. Es steigt die Verbrauchersicherheit. Bei den herkömmlichen, mehrfach verwendeten Fässern besteht die latente Gefahr von Kontamination. Im Fass befindliche, unerkannte Verunreinigungen können beim erneuten Befüllen und dem anschließenden Konsum zu Problemen führen. Werden Einweggefäße, wie bspw. Bag-In-Box-Systeme verwendet, so entfallen solche Risiken. Schließlich steigt auch die Sicherheit in der Schankanlage, da nur ein kleiner Teil einer Schankanlage, in der die Karbonisierung gemäß der Erfindung durchgeführt wird, unter Druck steht. Der Behälter, in dem das Bierzwischenprodukt enthalten ist, ist bevorzugt drucklos oder druckarm. Er unterliegt jedenfalls nicht der Druckbehälterverordnung. Anders dagegen im Stand der Technik, bei welchem die vergleichsweise großen Druckfässer unter Druck stehen, so dass das Fass ein sehr viel größeres Druckvolumen hat als der Karbonisator.

Es war bis jetzt für einen Brauer schlicht undenkbar, eine Flüssigkeit zu brauen, die gemäß der Erfindung als Bierzwischenprodukt bezeichnet wird. Eine Flüssigkeit, die zwar von ihren übrigen Inhaltsstoffen und Merkmalen dem bekannten Endprodukt Bier entspricht, die jedoch nicht die nötige Menge CO₂ besitzt. Ferner erschien es als widersinnig, die beim Gärvorgang natürlich entstehende Kohlensäure entweichen zu lassen und sogar darüber hinaus zu entfernen, um sie später wieder zuzusetzen. Die Erfinder hatten deshalb ein erhebliches Vorurteil im Stand der Technik zu überwinden, um zu dem erfmdungsgemäßen Verfahren zu gelangen.

In einer alternativen Ausführungsform des Verfahrens wird dem Bierzwischenprodukt neben CO₂ zumindest ein weiteres Gas, bspw. N₂, zugesetzt. Es können auch mehr als ein weiteres Gas zugesetzt werden. Der Anteil des zumindest einen weiteren Gases an dem insgesamt zugesetzten Gasvolumen beträgt von 0,5 bis 80 Vol.-%. CO₂ und das zumindest eine weitere Gas können gleichzeitig, z. B. in der Form eines Mischgases, z. B. in der Form einer CO₂/N₂-Mischung in einem Verhältnis von 30/70, oder nacheinander zugesetzt werden.

Sowohl das Zusetzen von CO₂, die sog. Karbonisierung, als auch des zumindest einen weiteren Gases zu dem Bierzwischenprodukt erfolgen mit Hilfe eines sog. Imprägnierers, bspw. einem Karbonator zum Zusetzen von CO₂. Hierfür wird ein Imprägnierer verwendet, bei dem die Imprägnierung mit Hilfe einer vergrößerten Oberfläche erfolgt. Für den Vorgang des Imprägnierens mit solch einem Imprägnierer wird das Bierzwischenprodukt mit dem zuzusetzenden CO₂ und ggf. zumindest einem weiteren Gas gemischt und dem Imprägnierer zugeführt. Die Mischung aus CO₂, ggf. zumindest einem weiteren Gas und Bierzwischenprodukt wird dort durch ein System voller Schikanen und Umlenkungen hindurchgeführt. Durch die vielen Schikanen und Umlenkungen wird eine große Oberfläche bereitgestellt und die Mischung wird immer aufs Neue durchbrochen und lokal verwirbelt, so dass das CO₂ und ggf. das zumindest eine weitere Gas in dem Bierzwischenprodukt gebunden wird. Der Einsatz eines Imprägnierers mit großer Oberfläche ist besonders vorteilhaft, da hierdurch eine feinperlige Verteilung der Kohlensäure und ggf. des zumindest einen weiteren Gases in dem Bierzwischenprodukt und damit in dem Endprodukt Bier ermöglicht wird. Ferner wird ein Schäumen des Bierzwischenproduktes während des Imprägnierungsvorgangs möglichst verhindert bzw. stark reduziert. Ein zur Verwendung bei der Ausführung der vorliegenden Erfindung geeigneter Imprägnierer ist z. B. ein Schüttgutkarbonator, wie er in der DE 101 60 397 A1 offenbart ist, oder ein Feststoffimprägnator, wie er in der DE 10 2006 014 814 beschrieben ist.

Versuche zeigten, dass sich das gemäß dem erfmdungsgemäßen Verfahren hergestellte Bier weder vom Geschmack noch von der Konsistenz oder der Optik her von Bier, das gemäß dem Verfahren des Standes der Technik hergestellt worden ist, unterscheidet.

Gemäß einem weiteren Aspekt der Erfindung ist die Verwendung eines Imprägnierers zur Herstellung von Bier vorgesehen. Bei dem verwendeten Imprägnierer handelt es sich um einen solchen, bei dem die Imprägnierung einer mit CO₂ und ggf. zumindest einem weiteren Gas vermischten Flüssigkeit durch eine hohe Oberfläche erzielt wird, bspw. wie in der DE 101 60 397 A1 oder der DE 10 2006 014 814 beschrieben. Bei der Verwendung wird ein mit CO₂ und ggf. zumindest einem weiteren Gas vermischtes, nach dem Verfahrensschritt a) des erfindungsgemäßen Verfahrens hergestelltes, CO₂-freies oder CO₂-armes Bierzwischenprodukt durch den Imprägnierer hindurchgeführt. Hierdurch werden das CO₂ und ggf. das zumindest eine weitere Gas an das Bierzwischenprodukt gebunden, das dadurch als Bier den Imprägnierer verlässt. Bevorzugt wird eine hohe Oberfläche im Imprägnierer durch Quarzgranulat oder durch ein poröses Material, insbesondere ein Sinter-, Gewebe-, Faser- oder geschäumtes Material, erzielt.

Die nachfolgende Tabelle gibt ein Ablaufdiagramm des erfindungsgemäßen Herstellungsverfahrens in schematischer Darstellung wieder.

**Tabelle 1: Herstellungsverfahren**

| **Stufe** | **Gerät / Anlage** | **Produktzustand Beginn** | **Prozessschritt / Verfahrensschritt** | **Produktzustand Ende** |
|---|---|---|---|---|
| 1a | Lagertank / ZKG (Zylindrokonischer Gärtank) | Würze nach der Hauptgärung | Nachgärung mit Tank-Gegendruck. Dauer ca. 4-6 Wochen. | unfiltriertes Bier ca. 5g CO₂/kg Bier |
| 1b | Lagertank / ZKG | Würze nach der Hauptgärung | Nachgärung ohne Tank-Gegendruck. Dauer ca. 4-6 Wochen. | Bierzwischenprodukt, unfiltriert ca. 3,4g CO₂/kg Bier |
| 2a | Filter | unfiltriertes Bier ca. 5g CO₂/kg Bier | Filtration | filtriertes Bier ca. 5g CO₂/kg Bier |
| 2b | Filter | Bierzwischenprodukt, unfiltriert ca. 3,4g CO₂/kg Bier | Filtration | Bierzwischenprodukt, filtriert ca. 3,4g CO₂/kg Bier |
| 3 | Entkarbonisator | filtriertes Bier (2a Ende) oder Bierzwischenprodukt filtriert (2b Ende) | Entfernen des überflüssigen CO₂-Gehalts bis definierte Endkonzentration CO₂ vorliegt. | Bierzwischenprodukt, filtriert mit wenig / kaum CO₂ (CO₂-arm bzw. CO₂-frei) |
| 4 | KZE- und Abfüllanlage | Bierzwischenprodukt, filtriert mit wenig / kaum CO₂ (CO₂-arm bzw. CO₂-frei) | KZE-Pasteurisation und anschließende Abfüllung in drucklosen oder kaum druckfähigen Behälter. | Abgefülltes Bierzwischenprodukt, filtriert mit wenig / kaum CO₂. Lagert in der Brauerei. |
| 5 | Verkauf / Transport | Abgefülltes Bierzwischenprodukt, filtriert mit wenig / kaum CO₂. Lagert in der Brauerei. | Verkauf des Produktes und Transport zum Kunden | Abgefülltes Bierzwischenprodukt, filtriert mit wenig / kaum CO₂. Beim Kunden. |
| 6 | Schankanlage mit Imprägnierer (Karbonator) | Abgefülltes Bierzwischenprodukt, filtriert mit wenig / kaum CO₂. Beim Kunden. | Zapfen und Karbonisieren des Bierzwischenproduktes mit CO₂. | Fertiges Bier im Glas des Verbrauchers |

Die schematische Darstellung beschreibt stufenweise den veränderten Herstellungsprozess des Bieres. Spalte eins beinhaltet die Stufen-Nummer. In der zweiten Spalte werden die stufentypischen Geräte/Anlagen definiert. Die dritten Spalte beschreibt den Produktzustand zu Beginn der Stufe, die nächste Spalte erläutert die prozesstechnischen Vorgänge und die letzte Spalte gibt den stufentypischen Produktendzustand wieder.

### Stufe 1: Nachgärung

Die veränderte Herstellung beginnt mit der Nachgärung. Entweder findet diese ganz konventionell mit Tank-Gegendruck (1a) statt, oder aber die Nachgärung findet ohne Tank-Gegendruck (1b) statt. Das Ergebnis ist bei (1a) ein unfiltriertes Bier mit fertigem Kohlensäuregehalt (ca. 5-6 g CO₂ pro kg Bier) oder bei (1b) ein unfiltriertes Bierzwischenprodukt mit ca. 3,4 g CO₂ pro kg Bier. Dies ergibt sich nach den physikalischen Bindungseigenschaften von CO₂ in Bier ohne Gegendruck bei ca. 0°C.

### Stufe 2: Filtration

Die Filtration findet in der Regel - jedoch nicht bei allen Bieren statt. Sie dient dem Entfernen von Trubteilchen und Hefezellen. Grund ist der Verbraucherwunsch nach einem klaren, blanken Produkt. Das Ergebnis ist bei (2a) ein filtriertes Bier oder bei (2b) ein filtriertes Bierzwischenprodukt mit jeweils unveränderten CO₂-Anteilen.

### Stufe 3: Entkarbonisierung

Unabhängig, ob die Nachgärung (Stufe 1) nach (1a) oder (1b), bzw. die Filtration (Stufe 2) nach (2a) oder (2b) verlief, muss nun der CO₂-Anteil bis auf maximal 1 g CO₂ pro kg Bier entfernt werden. Diese Menge ergibt sich aus dem zulässigen / tolerierbaren Maximal-Druck der Abfüllbehälter (bei Bag-In-Box-Behälter maximal 0,5 bar). Auch bei hohen Temperaturen von bis zu 80°C darf dieser Druck nicht erreicht werden. Das Ergebnis der Entkarbonisierung ist ein CO₂-armes oder sogar nahezu CO₂-freies Bierzwischenprodukt (bei Filtration filtriert, ansonsten unfiltriert).
Alternativ vorgesehen ist auch eine Entkarbonisierung mit anschließender Filtration.
(Vertauschung Stufe 2 und 3) Das Ergebnis nach der Stufe 3 wäre immer ein CO₂-armes oder sogar nahezu CO₂-freies Bierzwischenprodukt.

### Stufe 4: Abfüllung

Aus Haltbarkeitsgründen wird man das Bierzwischenprodukt, unabhängig ob filtriert oder nicht, unmittelbar vor der Abfüllung über eine KZE-Anlage (Kurzzeiterhitzungsanlage) pasteurisieren. Das Bierzwischenprodukt wird anschließend in einen geeigneten Behälter (bspw. Bag-In-Box) gefüllt. Dieser unterliegt dank des geringen Maximaldrucks nicht der Druckbehälterverordnung. Das Ergebnis ist ein abgefülltes Bierzwischenprodukt, welches sich noch in der Brauerei befindet.

### Stufe 5: Verkauf/Transport

Das abgefüllt Bierzwischenprodukt wird nun brauereiseitig verkauft und zum Kunden transportiert. Beispielsweise kann dies auch per Paketdienst erfolgen. Das Ergebnis ist ein abgefülltes Bierzwischenprodukt, welches sich letztendlich beim Kunden befindet.

### Stufe 6: Ausschank mit Imprägnierung, insbesondere Karbonisierung

In dieser Stufe wird durch Zugabe von CO₂ aus dem Bierzwischenprodukt das fertige Endprodukt Bier erzeugt. Wichtig ist, dass die Kohlensäure im Bier gebunden wird. Das Endprodukt ist vom klassisch produzierten und vertriebenen Bier nicht zu unterscheiden. Das Ergebnis dieser Stufe ist ein fertiges, frisch gezapftes Bier im Glas des Verbrauchers. Gemäß einer alternativen Ausführungsform kann das Bierzwischenprodukt zusätzlich zur Imprägnierung mit CO₂ mit zumindest noch einem weiteren Gas imprägniert werden.

Das folgende Ablaufdiagramm zeigt eine erste Ausfiihrungsform eines schematischen Aufbaus einer Schankanlage (Vorgang während Tabelle 1/Stufe 6).

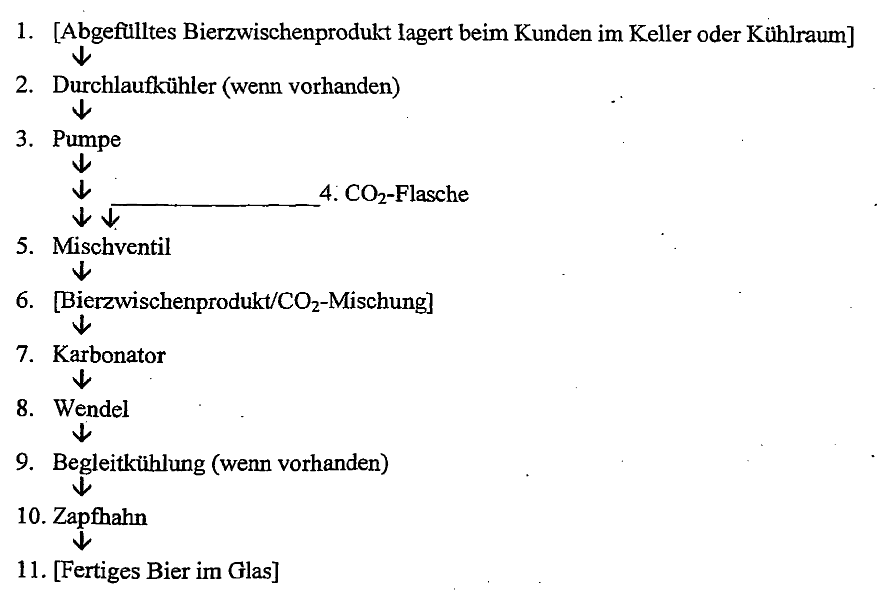

### 4. Abgefülltes Bierzwischenprodukt beim Kunden

Das abgefülltes Bierzwischenprodukt wird beim Kunden vorzugsweise im Kühlraum gelagert. Das Bierzwischenprodukt befindet sich in einem Behälter, der nicht der Druckbehälterverordnung unterliegt, z. B. Bag-In-Box Behälter. Typischerweise wird der Behälter dort gelagert, wo auch die KEG-Fässer (nach heutigem Stand der Technik) gelagert werden.

### 5. Durchlaufkühler

In der Regel muss das Bierzwischenprodukt noch gekühlt werden, insbesondere dann, wenn es nicht in einem Kühlraum gelagert wird. Zu diesem Zweck kann ein konventioneller und häufig bereits vorhandener Durchlaufkühler verwendet werden.

### 6. Pumpe

Die Pumpe saugt das Bierzwischenprodukt aus dem Behälter durch den Durchlaufkühler und presst es anschließend durch die restliche Schankanlage. Alternativ kann die Pumpe auch vor dem Durchlaufkühler (2) angebracht sein. In diesem Fall wird das Bierzwischenprodukt dann bereits durch den Durchlaufkühler gepresst und nicht gesaugt. Zum Fördern des Bierzwischenproduktes kann bspw. eine Membranpumpe eingesetzt werden, welche durch CO₂ aus der CO₂-Flasche (4) angetrieben werden kann. Alternativ kann auch Druckluft eingesetzt werden. Mit Hilfe der Pumpe wird das Bierzwischenprodukt nicht nur dem Mischventil (5) zugeführt, sondern das Bierzwischenprodukt und im weiteren Verlauf die Bierzwischenprodukt/CO₂-Mischung (6) werden durch die gesamte Anlage bis zum Zapfhahn gefördert. Der Förderdruck am Pumpenausgang kann bspw. 6 bar betragen. Durch diesen vergleichsweise hohen Förderdruck wird die CO₂-Aufiiahme im Karbonator (7) begünstigt.

### 7. CO₂-Flasche

Die CO₂-Flasche hat die Aufgabe das CO₂ zum Aufkarbonisieren des Bierzwischenproduktes zu liefern. Sie kann auch zusätzlich zum Antrieb der Pumpe verwendet werden.

### 8. Mischventil

Hier treffen das Bierzwischenprodukt und die Kohlensäure aus der CO₂-Flasche zusammen. Ein Bindung findet jedoch erst später im Karbonator (7) statt. Bevorzugt wird eine Endkonzentration des CO₂ im Endprodukt Bier (11) von 5-7 g CO₂ pro kg Bier. Der CO₂-Druck zum Beimischen des CO₂ zum Bierzwischenprodukt muss höher sein, als der Förderdruck des Bierzwischenproduktes, der durch die Pumpe (3) erzeugt wird. Eine Druckdifferenz von ca. 0,2 bar hat sich in Versuchen als günstig herausgestellt. Bei einem Förderdruck von 6 bar beträgt der CO₂-Druck folglich 6,2 bar. Aufgrund der Druckdifferenz zwischen CO₂-Druck und Förderdruck wird ein Mischen von CO₂ und Bierzwischenprodukt im Mischventil ermöglicht. Das Mischventil weist eine feine Düse auf, durch die das CO₂-Gas einströmt. Wird der Zapfhahn der Schankanlage (10) betätigt und Flüssigkeit (oder vielmehr Bier) entnommen, so kommt es aufgrund dieser feinen Düse zu einem CO₂-Druckabfall im Mischventil. Die feine Düse verhindert ein schlagartiges, "unbegrenzfes" Nachströmen von CO₂. Im Mischventil sinkt folglich der CO₂-Druck unter den Bierzwischenproduktförderdruck ab. Damit fließt Flüssigkeit in das Mischventil ein, so dass es nun zu einer Vermischung mit dem CO₂-Gas kommt.

### 9. Bierzwischenprodukt/CO₂-Mischung

Die Mischung aus dem Bierzwischenprodukt und der zugeführten Kohlensäure fließt in den Imprägnierer, hier den Karbonator (7).

### 10. Karbonator

Die Bierzwischenprodukt/CO₂-Mischung (6) wird dem Imprägnierer zugeführt. Wie oben ausgeführt, wird bevorzugt ein Imprägnierer mit großer Oberfläche eingesetzt, bspw. ein Schüttgutkarbonator oder Feststoffimprägnierer, an welcher sich die Kohlensäure mit dem Bierzwischenprodukt verbinden kann. Nach dem Durchlaufen des Imprägnierers hat sich die Kohlensäure mit dem Bierzwischenprodukt vermischt und ist an es gebunden. Folglich verlässt Bier den Imprägnierer.

### 11. Wendel

Das Bier tritt in eine Wendel ein, wo der Druckabbau erfolgt. Wie oben aufgeführt ist der Förderdruck vergleichsweise hoch (ca. 6 bar). In Schankanlagen herrscht jedoch typischerweise ein Druck von 2 bis 2,5 bar. Die Druckreduktion wird mit Hilfe einer Wendel mit einer variablen Anzahl von Windungen vorgenommen.

### 12. Begleitkühlung

Optional ist eine Begleitkühlung vorgesehen, um eine Erwärmung des Bieres auf dem Weg zum Zapfhahn zu verhindern. Die Notwendigkeit einer Begleitkühlung hängt von den Vor-Ort-Gegebenheiten ab.

### 13. Zapfhahn

Das Bier wird nun dem Zapfhahn der Schankanlage zugeführt. Im Zapfhahn ist üblicherweise ein so genannter Kompensator vorgesehen, mit welchem der Leitungsdruck abgebaut wird.

### 14. Fertiges Endprodukt im Glas

Aus dem Zapfhahn fließt als fertiges Endprodukt ein frisch gezapftes Bier in das Glas des Verbrauchers.

Nachfolgend zeigt ein Ablaufdiagramm eine weitere Ausführung einer Schankanlage (schematischer Aufbau) (Vorgang während Tabelle 1/Stufe 6).

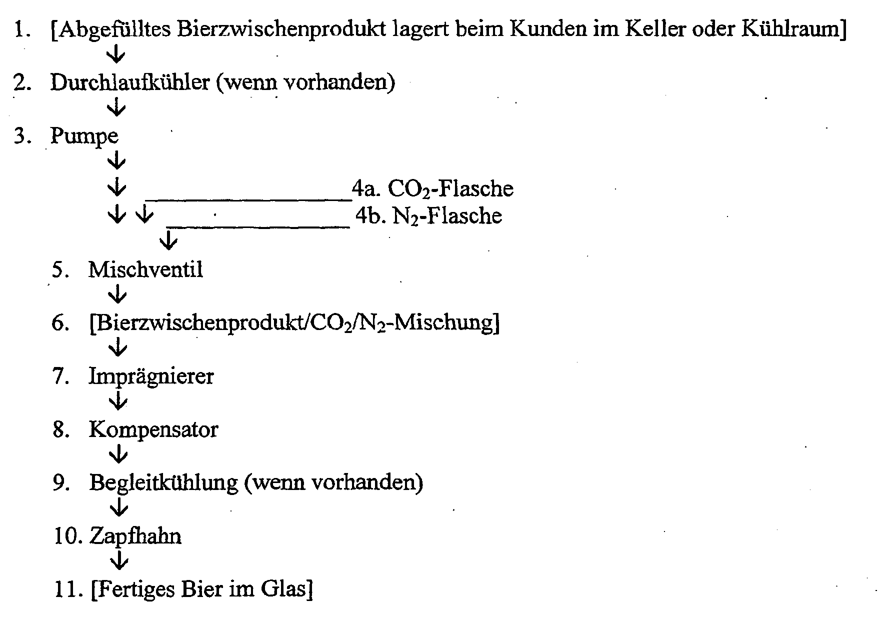

Zur näheren Erläuterung wird bei gleichen Teilen auf die obige Beschreibung verwiesen.

### 4. CO₂-Flasche (4a) und N₂-Flasche (4b)

Die CO₂-Flasche hat die Aufgabe das CO₂ zum Auflcarbonisieren des Bierzwischenproduktes zu liefern. Sie kann auch zusätzlich zum Antrieb der Pumpe verwendet werden. In der N₂-Flasche lagert Stickstoff als weiteres Gas. Alternativ können CO₂ und Stickstoff auch als fertige Mischung in dem gewünschten Mischungsverhältnis vorgesehen sein und in einer einzigen Flasche bereitgestellt werden. Als Beispiel sei hier Biogon angeführt (CO₂/N₂ = 30/70).

### 5. Mischventil

Hier treffen das Bierzwischenprodukt, die Kohlensäure aus der CO₂-Flasche und der Stickstoff aus der N₂-Flasche zusammen. Ein Bindung findet jedoch erst später im Imprägnierer (7) statt. In Bezug auf weitere Details wird auf die Beschreibung oben verwiesen.

### 6. Bierzwischenprodukt/CO₂/N₂-Mischung

Die Mischung aus dem Bierzwischenprodukt, der zugeführten Kohlensäure und dem zugeführten Stickstoff fließt in den Imprägnierer (7).

### 7. Imprägnierer

Die Bierzwischenprodukt/CO₂/N₂-Mischung (6) wird dem Imprägnierter zugeführt. Nach dem Durchlaufen des Imprägnierers haben sich die Kohlensäure und der Stickstoff mit dem Bierzwischenprodukt vermischt und sind an es gebunden. Folglich verlässt mit Stickstoff versetztes Bier den Imprägnierer.

### 8. Kompensator

Anstelle einer Wendel ist in dieser Ausführung ein Kompensator vorgesehen, um einen Druckabbau zu erzielen. Es sei darauf hingewiesen, dass sowohl bei diesem Ausführungsbeispiel als auch bei dem obigen jedes geeignete Mittel eingesetzt werden kann, mit dem eine Druckreduktion durchgeführt werden kann. Wendel und Kompensator sind hierfür Beispiele.

## Patentansprüche

1. Verfahren zur Herstellung von Bier, aufweisend die folgenden Schritte:
a) Herstellung eines Bierzwischenprodukts mit einem CO2-Anteil von maximal 1g pro kg, insbesondere eines CO2-freien Bierzwischenproduktes,
b) Abfüllen des Bierzwischenproduktes in zumindest einen bis zu maximal 0,5 bar Überdruck standhaltenden Behälter, und
c) Zusetzen von CO2 zu dem Bierzwischenprodukt in einer Schankanlage mit Hilfe eines Imprägnierers, insbesondere eines Karbonators, in welchem die Imprägnierung mit Gas, insbesondere die Karbonisierung, mit Hilfe einer vergrößerten Oberfläche, bereitgestellt durch viele Schikanen und Umlenkungen, erfolgt, wodurch das genussfertige, CO2-haltige Endprodukt Bier entsteht.

2. Verfahren nach Anspruch 1, wobei dem Bierzwischenprodukt neben CO2 in Schritt c) zumindest ein weiteres Gas zugesetzt wird.

3. Verfahren nach Anspruch 2, wobei N2 neben CO2 zugesetzt wird.

4. Verfahren nach Anspruch 2 oder 3, wobei der Anteil des zumindest einen weiteren Gases an dem insgesamt zugesetzten Gasvolumen 0,5 bis 80 Vol.-% beträgt.

5. Verfahren nach einem der vorhergehenden Ansprüche, wobei das Bierzwischenprodukt aus dem Behälter mit einer Pumpe gefördert und einem Mischventil zugeführt wird, worin CO2 und ggf. das zumindest eine weitere Gas mit dem Bierzwischenprodukt vermischt wird, wonach die Bietzwischenprodukt/GasMischung in den Imprägnierer eintritt, wo die Bindung von CO2 und dem ggf. zumindest einen weiteren Gas an das Bierzwischenprodukt erfolgt, wonach mit CO2 und ggf. zumindest einem weiteren Gas angereichertes Bierzwischenprodukt als Bier die Schankanlage über den Zapfhahn verlässt.

6. Verfahren nach Anspruch 5, wobei das Bierzwischenprodukt gekühlt wird, insbesondere in einem Durchlaufkühler vor Erreichen des Mischventils und/oder mit einer Begleitkühlung nach Verlassen des Imprägnierers.

7. Verfahren nach einem der vorhergehenden Ansprüche, **dadurch gekennzeichnet, dass** das Abfüllen des Bierzwischenproduktes in Bag-In-Box-Behälter, drucklose Fässer, drucklose Container oder Tetra-Pak®-Behälter erfolgt.

8. Verfahren nach einem der vorhergehenden Ansprüche, **dadurch gekennzeichnet, dass** die Herstellung des CO2-armen, insbesondere CO2-freien Bierzwischenproduktes durch Entkarbonisierung erfolgt, insbesondere durch Membranfiltration, Erhitzen, mechanische Bewegung, Austreiben, insbesondere mit N2 oder Luft, oder durch Erzeugung eines Vakuums, insbesondere mittels einer Vakuumpumpe oder einer Venturi-Düse.

9. Verwendung eines Imprägnierers, der eine mit CO2 und ggf. zumindest einem weiteren Gas vermischte Flüssigkeit mittels einer vergrößerten Oberfläche, bereitgestellt durch viele Schikanen und Umlenkungen, mit dem CO2 und ggf. dem zumindest einen weiteren Gas imprägniert, zur Herstellung von Bier, wobei ein mit CO2 und ggf. zumindest einem weiteren Gas vermischtes, nach dem Verfahrensschritt a) gemäß Anspruch 1 hergestelltes CO2-armes, insbesondere CO2-freies Bierzwischenprodukt durch den Imprägnierer hindurch geführt wird, wodurch CO2 und ggf. zumindest ein weiteres Gas an das Bierzwischenprodukt gebunden werden und Bier hergestellt wird.

10. Verwendung nach Anspruch 9, wobei es sich bei dem Imprägnierer um einen Schüttgutkarbonator, insbesondere einen solchen mit Quarzgranulat als Schüttgut, oder Festkörperkarbonator handelt.

## Claims

1. A process for producing beer, comprising the steps of:
a) producing a beer intermediate having a CO₂-part of not more then 1g per kg, in particular a CO₂-free beer intermediate,
b) racking the beer intermediate into a vessel capable of sustaining a maximum over-pressure of 0,5 bar, and
c) adding CO₂ to the beer intermediate in a dispensing facility, assisted by an impregnator, in particular a carbonator, utilizing an enlarged surface, provided by several baffles and deviations, as a result of which ready-to-consume, CO₂-containing end product beer is obtained.

2. The process according to claim 1, further comprising adding, in c), at least one further gas in addition to CO₂ to the beer intermediate.

3. The process according to claim 2, wherein N₂ is added in addition to CO₂.

4. The process according to claim 2 or 3, wherein the proportion of the at least one further gas with respect to the gas volume added overall amounts to 0.5 vol.% to 80 vol.%.

5. The process according to any one of the preceding claims, wherein the beer intermediate is conveyed out of the vessel with a pump and is supplied to a mixing valve in which CO₂ and optionally said at least one further gas is/are mixed with the beer intermediate, after which the beer-intermediate gas mixture enters the impregnator where the binding of CO₂ and optionally said at least one further gas to the beer intermediate is effected, after which beer intermediate enriched with CO₂ and optionally said at least one further gas leaves a dispensing facility as beer via the tapping cock.

6. The process according to claim 5, wherein the beer intermediate is cooled, in particular in a flow cooler prior to reaching the mixing valve and/or with an attendant cooling after leaving the impregnator.

7. The process according to any one of the preceding claims, **characterized in that** the racking of the beer intermediate is performed into bag-in-box vessels, pressureless casks, pressureless containers and/or Tetra-Pak^{®} vessels.

8. The process according to any one of the preceding claims, **characterized in that** the production of the CO₂-sparse, in particular CO₂-free, beer intermediate is effected by de-carbonation, in particular by membrane filtration, heating, mechanical motion, expulsion, in particular with N₂ or air, or by generation of a vacuum, in particular by means of a vacuum pump or a Venturi tube.

9. Use of an impregnator, impregnating a liquid mixed with CO₂ and optionally at least one further gas by means of an enlarged surface, provided by several baffles and deviations with said CO₂ and optionally said at least one further gas, so as to produce beer, wherein a CO₂-sparse or CO₂-free beer intermediate as produced in process step a), mixed with CO₂ and optionally at least one further gas is passed through the impregnator, as a result of which CO₂ and optionally said at least one further gas is/are bound to the beer intermediate and beer is produced.

10. The use according to claim 9, wherein the impregnator is a bulk-material carbonator, in particular one having quartz granulate as bulk-material, or a solid-matter carbonator.

## Revendications

1. Procédé de fabrication de bière, comprenant les étapes consistant à :
a) fabriquer un produit intermédiaire de bière avec une quantité de CO₂ de maximum 1g/kg, en particulier un produit intermédiaire de bière sans CO₂,
b) ensacher le produit intermédiaire de bière dans au moins un contenant supportant une pression allant jusqu'à un maximum de 0,5 bar et
c) ajouter du CO₂ au produit intermédiaire de bière dans un dispositif de distribution de boissons, au moyen d'un imprégnateur, en particulier un carbonisateur, dans lequel l'imprégnation avec du gaz, en particulier la carbonisation, est réalisée au moyen d'une surface élargie, fournit par beaucoup de redans et de déviations, de sorte que de la bière est obtenue en tant que produit final contenant du CO₂, prêt à consommer.

2. Procédé selon la revendication 1, dans lequel, à l'étape c), au moins un gaz additionnel est ajouté au produit intermédiaire de bière, en plus du CO₂.

3. Procédé selon la revendication 2, dans lequel N₂ est ajouté en plus du CO₂.

4. Procédé selon la revendication 2 ou 3, dans lequel la proportion dudit au moins un gaz additionnel par rapport au volume de gaz total est comprise entre 0,5 % et 80 %/vol.

5. Procédé selon l'une quelconque des revendications précédentes, dans lequel le produit intermédiaire de bière est extrait du contenant avec une pompe, et est conduit à une valve de mélange, où le CO₂ et, le cas échéant, le au moins un autre gaz est/sont mélangé(s) au produit intermédiaire, après quoi le produit intermédiaire de bière, mélangé au gaz(es) entre dans l'imprégnateur, où l'amalgation du CO₂ et, le cas échéant, du au moins un autre gaz, a lieu avec le produit intermédiaire de bière, après quoi le produit intermédiaire de bière enrichi en CO₂ et, le cas échéant au moins un autre gaz, quitte, en tant que bière, le dispositif de distribution de boissons par l'intermédiaire d'un robinet.

6. Procédé selon la revendication 5, dans lequel le produit intermédiaire de bière est refroidi, en particulier dans un refroidisseur à courant avant d'atteindre la valve de mélange et/ou au moyen d'un refroidissement auxiliaire en quittant l'imprégnateur.

7. Procédé selon l'une quelconque des revendications précédentes, **caractérisé en ce que** le ensachage du produit intermédiaire de bière est réalisé dans un contenant Bag-In-Box, un contenant sans pression, un fut ou casque sans pression ou dans un contenant Tetra-Pak®.

8. Procédé selon l'une quelconque des revendications précédentes, **caractérisé en ce que** la fabrication du produit intermédiaire de bière pauvre en CO₂, en particulier sans CO₂, est réalisée par décarbonation, en particulier par filtration membranaire, chauffage, mouvement mécanique, expulsion, en particulier avec N₂ ou de l'air, ou par génération d'un vide, en particulier au moyen d'une pompe à vide ou d'un tube Venturi.

9. Utilisation d'un imprégnateur, qui imprègne un fluide mélangé avec du CO₂ et, le cas échéant, au moins un autre gaz, au moyen d'une surface élargie, fournit par beaucoup de redans et déviations, avec ledit CO₂ et le cas échéant ledit au moins un autre gaz pour la fabrication de bière, dans laquelle un produit intermédiaire de bière pauvre en CO₂, en particulier sans CO₂, obtenu selon l'étape de procédé a) selon la revendication 1, mélangé avec du CO2 et, le cas échéant, au moins un autre gaz, est conduit dans un imprégnateur par lequel le CO₂ et, le cas échéant, au moins un autre gaz, est amalgamé au produit intermédiaire de bière, et de la bière est obtenue.

10. Utilisation selon la revendication 9, dans laquelle l'imprégnateur est un carbonateur à matière, en particulier un carbonateur avec un granulat de quartz en tant que matière, ou un carbonateur en matière solide.
